# EUROPÄISCHE PATENTSCHRIFT

(11) **EP 0 524 341 B1**
(45) Veröffentlichungstag und Bekanntmachung des Hinweises auf die Patenterteilung: **14.09.1994**
(21) Anmeldenummer: 91112552.4
(22) Anmeldetag: 26.07.1991
(51) Int. Cl.: G01B 5/00

(54) **Mehrkoordinaten-Tastkopf**
Multi-coordinates feeler head
Tête de palpage pour coordonnées multiples

(43) Veröffentlichungstag der Anmeldung: 27.01.1993
(73) Patentinhaber: Dr. Johannes Heidenhain GmbH, D-83292 Traunreut (DE)
(72) Erfinder: Fiedler, Karl, W-8221 Surberg (DE)

(56) Entgegenhaltungen:
- DE-C- 2 742 817
- DE-C- 3 508 396
- DE-C- 3 640 160

## Beschreibung

Die Erfindung betrifft einen Mehrkoordinaten-Tastkopf gemäß dem Oberbegriff des Anspruches 1 sowie ein verfahren zur axialen und radialen Einstellung von Lagerkörpern und/oder Gegenkörpern der Lagerstellen bei einem derartigen Mehrkoordinaten-Tastkopf.

Die Erfindung kann bei messenden sowie schaltenden Mehrkoordinaten-Tastköpfen angewendet werden. Bei beiden Ausführungsarten ist es besonders wichtig, daß der Taststift bei einer Antastung eines Werkstücks aus einer beliebigen Antastrichtung reproduzierbar auslenkbar ist. Um dies zu erreichen wurden bereits verschiedenartige Lagerungen für den Taststift vorgeschlagen.

In der DE-C- 27 42 817 ist ein Mehrkoordinaten-Tastkopf mit mehreren Lagerstellen angegeben. In einem mit dem Taststift verbundenen Meßteller befindet sich eine V-Nut konzentrisch um die Tastkopfachse. Im Gehäuse des Tastkopfes befindet sich gegenüberliegend ebenfalls eine ringförmig verlaufende V-Nut. In jede dieser V-Nuten werden mehrere Kugeln eingeklebt, wobei jede Lagerstelle durch das Zusammenwirken von drei Kugeln gebildet wird. Die Kugeln liegen sich so gegenüber, daß jede Kugel im Meßteller zwei Kugeln im Gehäuse des Tastkopfes berührt. Um sicherzustellen, daß zwischen den Kugeln die gewünschte Berührung stattfindet, läßt man die Kugeln bei der Einstellung frei in ihren Nuten rollen, wo sie sich dann aufgrund der auf den Meßteller ausgeübten Federkraft und der Wölbungen der Kugeln selbst ausrichten. Nach dieser Einstellung härtet ein in die V-Nuten eingebrachter Klebstoff aus und hält die Kugeln in den V-Nuten.

Da jede Kugel sich in Umfangsrichtung in Abhängigkeit aller anderen Kugeln einstellt addieren sich bei der Einstellung die Reibkräfte und es erhöht sich somit die zur Einstellung notwendige Kraft. Weiterhin hat sich gezeigt, daß zwischen den einzelnen Kugeln und der V-Nut ungleichmäßige und relativ große Klebespalte entstehen, wodurch ungleiche Elastizitätseigenschaften und Steifigkeit der einzelnen Lagerstellen hervorgerufen werden. Die großen Klebespalte, insbesondere in Umfangsrichtung der V-Nuten, bewirken bei Temperaturänderungen sowie bei Einwirkung von Feuchtigkeit eine Verlagerung der Kugeln.

Aus der DE-C- 35 08 396 ist ein Mehrkoordinaten-Tastkopf bekannt, bei dem jede Lagerstelle unabhängig von den anderen Lagerstellen einstellbar ist. Jede Lagerstelle wird von einer Kugel und von einem einstellbaren Zylinderkörper mit einer V-Nut gebildet. Jeder Zylinderkörper ist um seine Achse drehbar und axial verschiebbar, damit die V-Nut auf die zugeordnete Kugel ausgerichtet werden kann.

Nachteilig bei dieser Anordnung ist, daß jede Lagerstelle nur durch zwei Berührungspunkte zwischen einer V-Nut und einer Kugel gebildet wird. Diese Punktberührung führt zu einer relativ geringen Steifigkeit der einzelnen Lagerstellen.

Um die Steifigkeit zu erhöhen, wurde in der DE-C-36 40 160 ein Mehrkoordinaten-Tastkopf vorgeschlagen, bei dem jede Lagerstelle von einem axial und radial einstellbaren Lager- und Gegenkörper gebildet wird. Die Berührungszonen der jeweiligen Oberflächenbereiche der Lagerkörper und der Oberflächenbereiche der zugeordneten Gegenkörper bilden jeweils eine Kreislinie. Die Einstellung einer Kegelbohrung gegenüber einer Kugel erfolgt mittels eines Doppelexzenters. Die Kegelbohrung ist außerhalb der Drehachse eines drehbaren Zylinders eingebracht. Dieser Zylinder ist wiederum exzentrisch in einem drehbaren Aufnahmezylinder gelagert. Zur Einstellung müssen der innere Zylinder und der Aufnahmezylinder gegeneinander verdreht und in axialer Richtung verschoben werden.

Dieser Tastkopf hat sich zwar bewährt, erfordert aber relativ viel Aufwand bei der Herstellung.

Der Erfindung liegt die Aufgabe zugrunde, eine Lagerung für Mehrkoordinaten-Tastköpfe zu schaffen, die definierte sowie konstante Antastbedingungen in allen Antastrichtungen gewährleistet.

Die Beständigkeit und Steifigkeit der Lagerung soll gegenüber den bekannten Tastköpfen erhöht werden. Weiterhin soll eine präzise und einfache Montage und Einstellung ermöglicht werden.

Diese Aufgabe wird gemäß der Erfindung durch die Merkmale des Anspruches 1 und des Anspruches 2 gelöst.

In den abhängigen Ansprüchen sind vorteilhafte Ausgestaltungen der Erfindung angegeben.

Die besonderen Vorteile der Erfindung liegen darin, daß sich die Lagerkörper jeder Lagerstelle unabhängig von den anderen Lagerkörpern selbsttätig gegenüber den zugeordneten Gegenkörpern ausrichten. Dadurch wird eine Lagerung für den Taststift geschaffen, bei der eine Wiederholbarkeit der Messung unabhängig von der Antastrichtung gewährleistet ist. Durch die Ausbildung der Lagerung ist auch eine hohe Steifigkeit und Beständigkeit jeder Lagerstelle gegeben.

Anhand der Zeichnungen werden Ausführungsbeispiele der Erfindung näher erläutert.

Es zeigt
- Figur 1: einen Axialschnitt durch einen erfindungsgemäßen Tastkopf,
- Figur 2: einen Schnitt entlang der Linie II-II des Tastkopfes aus Figur 1 mit abgenommenem Meßteller,
- Figur 3: eine Lagerstelle des Tastkopfes nach Figur 1 und 2 im Schnitt,
- Figur 4: Lagerkörper und Gegenkörper nach Figur 3 in perspektivischer Ansicht,
- Figur 5 bis 9: weitere Ausführungsformen der Lagerkörper und Gegenkörper.

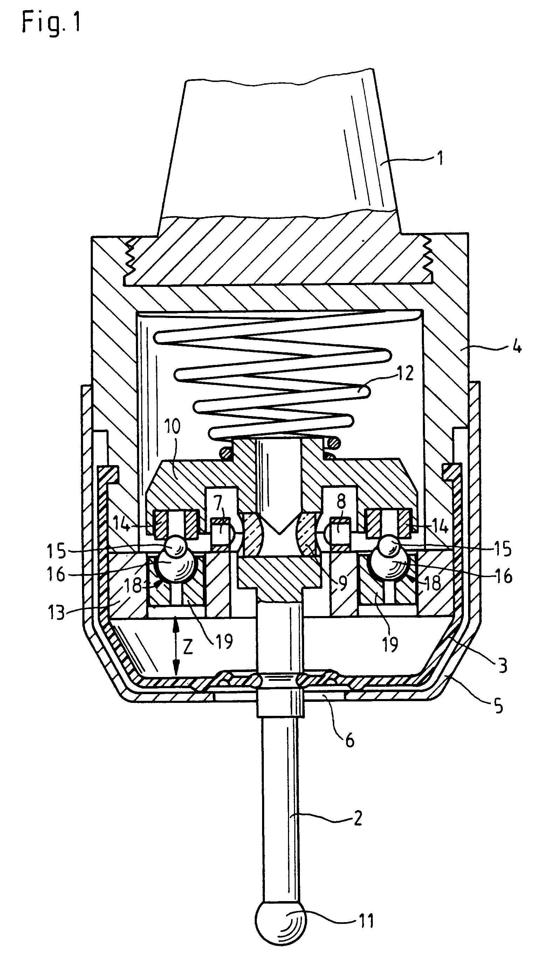

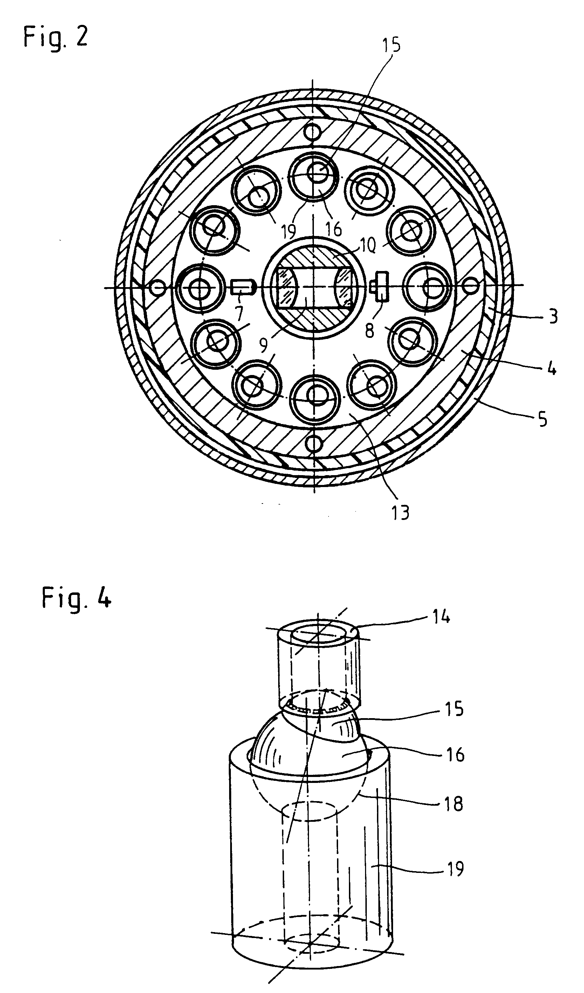

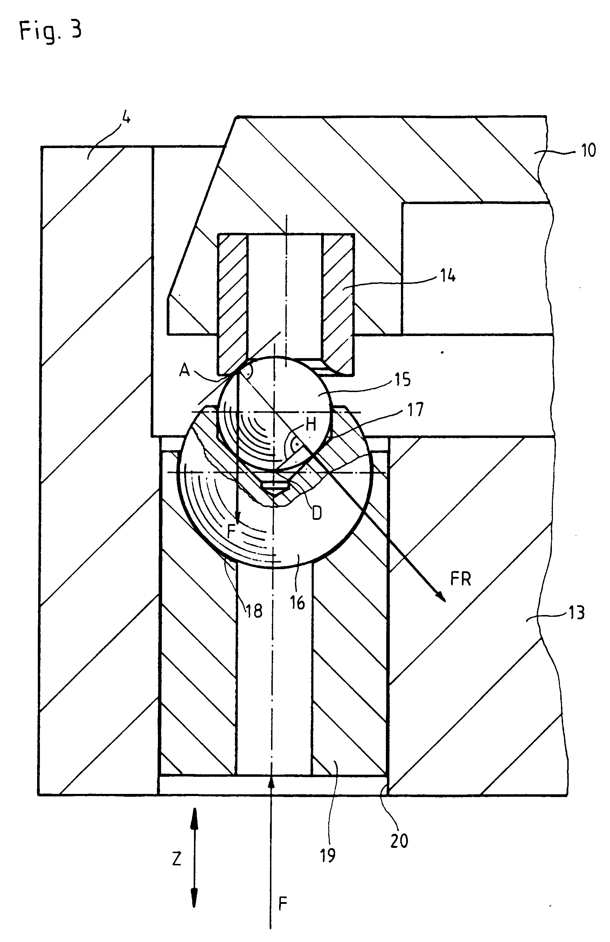

In den Figuren 1 und 2 ist der gesamte Aufbau eines Mehrkoordinaten-Tastkopfes ersichtlich. Der gezeigte Tastkopf ist als schaltender Taster ausgeführt. Ein derartiger Mehrkoordinaten-Tastkopf wird auch als 3 D-Taster, Trigger-Probe oder Touch-Sensor bezeichnet. Er ist ein feinmechanisches Gerät, das einen Einspannschaft 1 zur Aufnahme in eine Spindel einer nicht dargestellten Meß- oder Bearbeitungsmaschine besitzt. Die Auslenkung eines Taststiftes 2 ist in allen Richtungen möglich. Eine Dichtung 3 schließt den Zwischenraum zwischen einem Tastkopfgehäuse 4 und dem Taststift 2. Ein Blechschutz 5 verhindert die Beschädigung der Dichtung 3 durch heiße Späne, läßt aber einen freien Raum 6, der dem Taststift 2 eine begrenzte Auslenkung aus seiner Nullage gestattet.

Der Taststift 2 ist mit einem Meßteller 10 verbunden, in dessen Stirnfläche eine Vielzahl von Buchsen 14 als Gegenkörper in einer ringförmigen Anordnung eingesetzt sind. Die Buchsen 14 ruhen auf Kugeln 15 als Lagerkörper. Jede Buchse 14 bildet mit einer Kugel 15 eine Lagerstelle, im Beispiel sind 12 gleichartige Lagerstellen konzentrisch gleichmäßig in einer Ebene um die Tastkopfachse angeordnet. Berührt die am Taststift 2 befestigte Antastkugel 11 ein Werkstück, so hebt sich der Meßteller 10 gegen die Wirkung einer Vorspannfeder 12 und die Mitte des Meßtellers 10 wird unabhängig von der Antastrichtung nach oben, also in Richtung des Einspannschaftes 1 verschoben.

Eine Detektoranordnung in Form einer Lichtschranke, die aus einer LED 7, einem Linsensystem 9 und einem Differentialphotoelement 8 besteht, gibt bei einem bestimmten Auslenkungsbetrag des Meßtellers 10 und damit des Linsensystems 9 einen Antastimpuls ab. Dieser Antast- oder Schaltimpuls wird zur Bestimmung des Zeitpunktes der Meßwertübernahme einer Koordinaten-Meßmaschine oder zur Steuerung einer Werkzeugmaschine herangezogen.

Um die Übersetzung zwischen der seitlichen Bewegung der Antastkugel 11 und der Höhenbewegung des Linsensystems 9 unabhängig von der Antastrichtung konstant zu halten sind die Kugeln 15 im Tastkopfgehäuseboden 13 axial und radial relativ zu den Buchsen 14 einstellbar. Durch diese Einstellbarkeit können die bei der Fertigung unvermeidlichen Toleranzen zueinander ausgeglichen werden. Zur Einstellung ist jede Kugel 15 in einem um seinen Mittelpunkt in allen Richtungen schwenkbaren Kugelkörper 16 befestigt, vorzugsweise in eine Bohrung 17 eingepreßt.

Zum besseren Verständnis ist in Figur 3 eine Lagerstelle vergrößert im Schnitt und in Figur 4 perspektivisch dargestellt.

Jeder Kugelkörper 16 ist in einem Sitz 18 drehbar gelagert. Der Sitz 18 ist in einer axial verschiebbaren Halterung 19 in Form einer Buchse eingebracht und die Oberfläche des Sitzes 18 ist dem Kugelkörper 16 so angepaßt, daß sich der Kugelkörper 16 möglichst spielfrei um seinen Mittelpunkt drehen kann. Der Durchmesser des Kugelkörpers 16 ist beispielsweise 5mm und der Durchmesser der eingepreßten Kugel 15 beispielsweise 3mm gewählt.

Bei der Einstellung wird der Sitz 18 sowie die Bohrung 20 für die Halterung 19 im Meßteller 10 mit verzugsfrei aushärtbaren Klebstoff bestrichen. Die Kugelkörper 16 werden in die Sitze 18 der Halterungen 19 gelegt und die Halterungen 19 in die Bohrungen 20 des Meßtellers 10 eingeführt. Die Halterungen 19 werden so lange axial (in Z-Richtung) verschoben, bis jede Kugel 15 so mit der ihr zugeordneten Buchse 14 zusammenwirkt, daß die Berührungszonen der jeweiligen Oberflächenbereiche jeweils eine Kreislinie bilden.

In der Figur 3 ist ersichtlich, wie sich eine Kugel 15 durch Drehen des Kugelkörpers 16 einer Buchse 14 anpaßt. Wird auf die Halterung 19 in Z-Richtung eine Kraft F ausgeübt, so wirkt diese Kraft F bei einer Fehlausrichtung am Angriffspunkt A zwischen den Oberflächenbereichen der Buchse 14 und der Kugel 15. Diese Kraft F übt in Bezug auf den Drehpunkt D des Kugelkörpers 16 ein Drehmoment auf den Kugelkörper 16 aus, indem die resultierende Kraft FR an einem Hebelarm H angreift. Dieses Drehmoment verursacht eine Drehung des Kugelkörpers 16, bis die Kugel 15 die Buchse 14 auch gegenüberliegend und somit kreisringförmig berührt. In dieser Weise wird die Lage jeder Kugel 15 der korrespondierenden Buchse 14 angepaßt. Diese Lage einer Kugel 15 ist in der Figur 4 perspektivisch gezeigt. Die Steifigkeit jeder Lagerstelle ist besonders gut, wenn die Kugel 15 mit dem abgerundeten Rand der Buchse 14 zusammenwirkt.

Nach dem Aushärten des Klebstoffes bietet diese Lagerung den Vorteil hoher und gleichmäßiger Steifigkeit unabhängig von der Antastrichtung, wodurch eine äußerst gute Schaltcharakteristik gewährleistet ist.

Die zur Einstellung erforderliche Kraft F kann beispielsweise durch eine Vorrichtung mit den Halterungen 19 zugeordnete Federn ausgeübt werden oder durch Beaufschlagung der Halterungen 19 mit Druckluft. Es ist leicht einzusehen, daß sich jede Kugel 15 selbsttätig radial durch Schwenken um den Mittelpunkt des zugeordneten Kugelkörpers 16 einstellt und die Nachstellung in Z-Richtung durch Verschieben der Halterung 19 erfolgt.

Im gezeigten Beispiel sind als Gegenkörper für die Kugeln 15 im Meßteller 10 eingeklebte Buchsen vorgesehen. Als Gegenkörper kann auch für jede Kugel 15 eine Bohrung oder eine Nut im Meßteller 10 oder mehrere walzenförmige Körper, die mit ihren sphärisch gekrümmten Oberflächen mit der Kugel 15 zusammenwirken, vorgesehen werden.

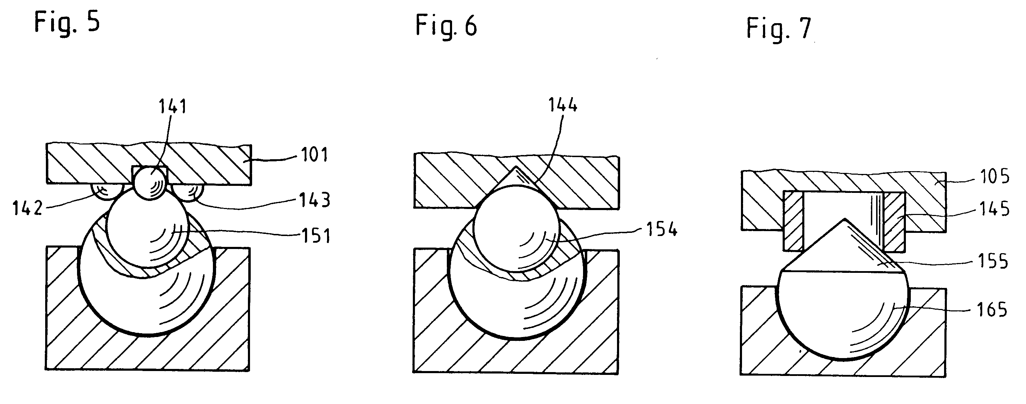

Als vorteilhaft hat sich als Gegenkörper die Anordnung nach Figur 5 erwiesen. Als Gegenkörper für eine Kugel 151 sind jeweils drei in einer Ebene liegende um 120° gegeneinander versetzte Kugeln 141, 142, 143 am Meßteller 101 befestigt. Im eingestellten Zustand liegt im Zentrum der drei Kugeln 141, 142, 143 die Kugel 151 und berührt jede Kugel 141, 142, 143 an einem Punkt. In nicht gezeigter Weise können auch mehrere Kugeln, beispielsweise vier, den Gegenkörper bilden.

Wie in der Figur 6 gezeigt ist, kann als Gegenkörper auch eine Kegelbohrung 144 für die Kugel 154 dienen. In nicht gezeigter Weise ist auch eine Vertiefung in Form einer negativen Pyramidenspitze möglich, wobei sich die zugeordnete Kugel als Lagerkörper an jeder der drei Pyramidenflächen an einem Punkt abstützt und jede Lagerstelle eine Dreipunktlagerung bildet.

Bei den vorstehend beschriebenen Beispielen muß selbstverständlich der mit dem Gegenkörper zusammenwirkende Lagerkörper nicht unbedingt als separate Kugel ausgebildet sein. Die mit dem Gegenkörper zusammenwirkende kugelig gekrümmte Oberfläche kann auch an den zur Einstellung um seinen Mittelpunkt drehbaren Kugelkörper angeformt sein.

Die Lagerkörper können nach Figur 7 auch als Kegel 155 ausgebildet sein, die an die Kugelkörper 165 einstückig angeformt sind. Als Gegenkörper kann eine Buchse 145 im Meßteller 105 dienen. Ebenso sind Gegenkörper in Form von in den Meßteller eingebrachten Bohrungen, Nuten, walzenförmigen Körpern oder die in der Figur 5 gezeigte Anordnung von drei um 120° gegeneinander versetzten Kugeln denkbar, in dessen Zentrum der Kegel ruht.

Anstelle des Kegels 155 kann auch eine Pyramidenspitze vorgesehen werden, die insbesonders mit drei um 120° gegeneinander versetzten Kugeln als Gegenkörper zusammenwirkt. Im eingestellten Zustand berührt jede Kugel eine Pyramidenfläche an einem Punkt, jede Lagerstelle entspricht somit einer Dreipunktlagerung.

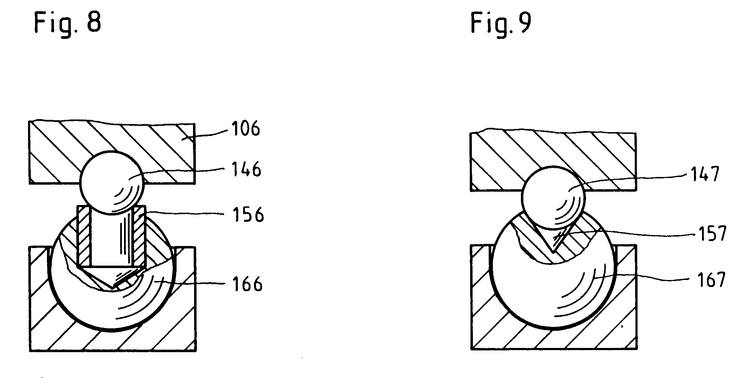

Wie in der Figur 8 gezeigt ist, kann der Lagerkörper als Buchse 156 in dem Kugelkörper 166 fixiert sein. Als Gegenkörper ist eine in den Meßteller 106 eingebrachte Kugel 146 gezeigt, ebenso ist auch ein Kegel denkbar.

In der Figur 9 dient der Kugelkörper 167 direkt als Lagerkörper, indem eine Kegelbohrung 157 eingebracht ist. mit der Oberfläche der Kegelbohrung 157 wirkt im gezeigten Beispiel eine Kugel 147 als Gegenkörper zusammen, ebenso ist auch ein Kegel als Gegenkörper denkbar.

In nicht gezeigter Weise kann in den Kugelkörper auch eine Nut eingebracht sein, die mit einer Kugel, einem Kegel oder einem walzenförmigen Körper in Form eines Zylinders zusammenwirkt.

Die als Lagerkörper beschriebenen Elemente und Oberflächenformen können auch als Gegenkörper eingesetzt werden, wobei die Gegenkörper dann als Lagerkörper dienen. Ebenso ist es möglich, daß die beschriebenen Gegenkörper in einem erfindungsgemäß gelagerten und einstellbaren Kugelkörper vorgesehen sind.

In allen beschriebenen Ausführungen sind die Lagerkörper in Z-Richtung axial verschiebbar, selbstverständlich können die Lagerkörper auch in Z-Richtung fixiert sein und zur Nachstellung in Z-Richtung die Gegenkörper axial verschiebbar sein. Weiterhin können auch die einstellbaren Lagerkörper mit den Sitzen im Meßteller vorgesehen sein, wobei dann die Gegenkörper im Tastkopfgehäuseboden angeordnet sind.

Wie bereits erläutert, ist es besonders vorteilhaft, wenn die Kugelkörper nach der erfolgten Ausrichtung der Lagerkörper gegenüber den Gegenkörpern durch Aushärten des Klebstoffes in den Sitzen fixiert werden. Darüberhinaus sind aber noch andere Verfahren zum Fixieren der Lage des Kugelkörpers gegenüber dem Sitz denkbar, wie beispielsweise das Vergießen nach erfolgter Einstellung.

Die erfindungsgemäße Lagerung kann auch bei einer Überlastsicherung wie sie in der EP-A- 0 103 090 beschrieben ist oder bei einer Wechseleinrichtung für Taststifte, Tastköpfe und Werkzeuge eingesetzt werden.

## Patentansprüche

1. Mehrkoordinaten-Tastkopf mit wenigstens einem, in mehrere Koordinatenrichtungen auslenkbaren Taststift (2), der in einer Lagerung mit mehreren Lagerstellen gelagert ist, wobei jede Lagerstelle durch das Zusammenwirken der Oberflächenbereiche von axial und radial zueinander einstellbaren Lagerkörpern (15) und Gegenkörpern (14) gebildet wird, dadurch gekennzeichnet, daß die Lagerkörper (15) und/oder Gegenkörper (14) jeweils an einem Kugelkörper (16) angebracht oder von diesem selbst gebildet sind, und daß die Lagerkörper (15) und/oder Gegenkörper (14) über jeweils den in einem Sitz (18) um seinen Mittelpunkt in allen Richtungen drehbar gelagerten Kugelkörper (16) einstellbar sind.

2. Verfahren zur axialen und radialen Einstellung von Lagerkörpern (15) und/oder Gegenkörpern (14) der Lagerstellen bei einem Mehrkoordinaten-Tastkopf nach Anspruch 1, dadurch gekennzeichnet, daß jede Lagerstelle durch das Zusammenwirken von Oberflächenbereichen des Lagerkörpers (15) und Gegenkörpers (14) gebildet wird, wobei während der Einstellung eine an den Oberflächenbereichen ausgeübte Kraft F ein Drehmoment auf den Kugelkörper (16) in bezug auf den Drehpunkt D dieses Kugelkörpers (16) ausübt und sich somit der Lagerkörper (15) dem zugeordneten Gegenkörper (14) anpaßt, wobei nach der Einstellung der Kugelkörper (16) unverrückbar in seinem Sitz (18) montiert ist.

3. Mehrkoordinaten-Tastkopf nach Anspruch 1, dadurch gekennzeichnet, daß die Lagerstellen konzentrisch um die Tastkopfachse angeordnet sind.

4. Mehrkoordinaten-Tastkopf nach Anspruch 1, dadurch gekennzeichnet, daß die Lagerkörper als Kugeln (15, 151, 154) oder Kegel (155) ausgebildet sind, die an den drehbaren Kugelkörpern (15, 155) befestigt oder angeformt sind.

5. Mehrkoordinaten-Tastkopf nach Anspruch 4, dadurch gekennzeichnet, daß jede Kugel (15, 151, 154) oder jeder Kegel (155) so mit einem Gegenkörper (14, 144, 145) zusammenwirkt, daß die Berührungszonen der jeweiligen Oberflächenbereiche der Kugeln (15, 151, 154) oder Kegel (155) mit den Oberflächenbereichen der zugeordneten Gegenkörper (14, 144, 145) jeweils eine Kreislinie bilden.

6. Mehrkoordinaten-Tastkopf nach Anspruch 4, dadurch gekennzeichnet, daß jede Kugel (15, 151, 154) oder jeder Kegel (155) mit Oberflächenbereichen einer Bohrung (144), einer Buchse (14, 145), mehrerer Kugeln (141, 142, 143), mehrerer walzenförmiger Körper oder einer Nut als Gegenkörper zusammenwirkt.

7. Mehrkoordinaten-Tastkopf nach Anspruch 6, dadurch gekennzeichnet, daß die Kugeln (151) oder Kegel jeweils mit drei um 120° gegeneinander versetzt angeordneten Kugeln (141, 142, 143) zusammenwirken, wobei jede Kugel (151) oder jeder Kegel mit den drei Kugeln (141, 142, 143) eine Dreipunktlagerung als Lagerstelle bildet.

8. Mehrkoordinaten-Tastkopf nach Anspruch 1, dadurch gekennzeichnet, daß die Lagerkörper als Bohrungen, Kegelbohrungen (157), Nuten oder in Form von Buchsen (156) ausgebildet sind.

9. Mehrkoordinaten-Tastkopf nach Anspruch 8, dadurch gekennzeichnet, daß als Gegenkörper jeweils eine Kugel (146, 147) oder ein Kegel vorgesehen ist.

10. Mehrkoordinaten-Tastkopf nach einem der vorhergehenden Ansprüche 1, 3 bis 9, dadurch gekennzeichnet, daß die Sitze der Kugelkörper in einem mit dem Taststift verbundenen Meßteller und die Gegenkörper am Tastkopfgehäuse Vorgesehen sind.

11. Mehrkoordinaten-Tastkopf nach einem der vorhergehenden Ansprüche 1, 3 bis 9, dadurch gekennzeichnet, daß die Sitze (18) der Kugelkörper (16) am Tastkopfgehäuse (4, 13) und die Gegenkörper (14) an einem im Tastkopfgehäuse (4, 13) gelagerten Meßteller (10) vorgesehen sind.

12. Mehrkoordinaten-Tastkopf nach einem der vorhergehenden Ansprüche 1, 3 bis 11, dadurch gekennzeichnet, daß die Sitze (18) mit den Kugelkörpern (16) und/oder die Gegenkörper (14) an axial verschiebbaren Halterungen (19) angebracht sind.

## Claims

1. Multi-coordinate tracer head with at least one tracer pin (2) which can be deflected in several coordinate directions and which is mounted in a bearing with several bearing points, wherein each bearing point is formed by cooperation of the surface regions of bearing bodies (15) and counter-bodies (14) which are axially and radially adjustable relative to each other, characterised in that the bearing bodies (15) and/or counter-bodies (14) are each mounted on a ball body (16) or formed by the latter itself, and in that the bearing bodies (15) and/or counter-bodies (14) are adjustable in each case by the ball body (16) which is mounted in a seat (18) for rotation about its centre in all directions.

2. Method for the axial and radial adjustment of bearing bodies (15) and/or counter-bodies (14) of the bearing points in a multi-coordinate tracer head according to claim 1, characterised in that each bearing point is formed by the cooperation of surface regions of the bearing body (15) and counter-body (14), wherein during adjustment a force F applied to the surface regions applies a torque to the ball body (16) in relation to the pivot point D of this ball body (16) and thus the bearing body (15) adapts to the associated counter-body (14), wherein after adjustment the ball body (16) is mounted immovably in its seat (18).

3. Multi-coordinate tracer head according to claim 1, characterised in that the bearing points are arranged concentrically about the axis of the tracer head.

4. Multi-coordinate tracer head according to claim 1, characterised in that the bearing bodies are constructed as balls (15, 151, 154) or cones (155) which are attached to or formed integrally with the rotatable ball bodies (15, 155).

5. Multi-coordinate tracer head according to claim 4, characterised in that each ball (15, 151, 154) or cone (155) cooperates with a counter-body (14, 144, 145) in such a way that the contact zones of the respective surface regions of the balls (15, 151, 154) or cones (155) each form a circular line with the surface regions of the associated counter-bodies (14, 144, 145).

6. Multi-coordinate tracer head according to claim 4, characterised in that each ball (15, 151, 154) or cone (155) cooperates with surface regions of a bore (144), a bush (14, 145), several balls (141, 142, 143), several roller-like bodies or a groove as the counter-body.

7. Multi-coordinate tracer head according to claim 6, characterised in that the balls (151) or cones each cooperate with three balls (141, 142, 143) offset from each other by 120°, wherein each ball (151) or cone forms with the three balls (141, 142, 143) a three-point bearing as the bearing point.

8. Multi-coordinate tracer head according to claim 1, characterised in that the bearing bodies are constructed as bores, cone bores (157), grooves or in the form of bushes (156).

9. Multi-coordinate tracer head according to claim 8, characterised in that in each case a ball (146, 147) or cone is provided as the counter-body.

10. Multi-coordinate tracer head according to any of the preceding claims 1, 3 to 9, characterised in that the seats of the ball bodies are provided in a measuring plate (10) connected to the tracer pin, and the counter-bodies are provided on the tracer head housing.

11. Multi-coordinate tracer head according to any of the preceding claims 1, 3 to 9, characterised in that the seats (18) of the ball bodies (16) are provided on the tracer head housing (4, 13), and the counter-bodies (14) are provided on a measuring plate (10) mounted in the tracer head housing (4, 13).

12. Multi-coordinate tracer head according to any of the preceding claims 1, 3 to 11, characterised in that the seats (18) with the ball bodies (16) and/or the counter-bodies (14) are mounted on axially slidable supports (19).

## Revendications

1. Tête de palpage multiaxes comportant au moins une touche (2) orientable suivant plusieurs axes de coordonnées qui est supportée par un ensemble formant palier à plusieurs paliers élémentaires, chaque palier élémentaire étant constitué par l'action conjuguée des zones superficielles d'éléments de palier (15) et de contre-éléments (14) réglables les uns par rapport aux autres dans les directions axiale et radiale, caractérisée par le fait que les éléments de palier (15) et/ou les contre-éléments (14) sont montés chaque fois sur un élément sphérique (16) ou sont formés par celui-ci et par le fait que les éléments de palier (15) et/ou les contre-éléments (14) peuvent être réglés par l'intermédiaire chacun de l'élément sphérique (16) qui repose sur un siège avec possibilité de rotation dans toutes les directions.

2. Procédé de réglage dans les directions axiale et radiale d'éléments de palier (15) et/ou de contre-éléments (14) des paliers individuels dans une tête de palpage multiaxes selon la revendication 1, caractérisé par le fait que chaque palier individuel est constitué par l'action conjuguée de zones superficielles de l'élément de palier (15) et du contre-élément (14), lors du réglage, une force F qui s'applique sur les zones superficielles engendrant au niveau des éléments sphériques (16) un couple de rotation par rapport au centre de rotation D dudit élément sphérique (16), l'élément de palier (15) s'adaptant ainsi au contre-élément (14) associé et, après réglage, l'élément sphérique (16) étant monté sans possibilité de déplacement sur son siège (18).

3. Tête de palpage multiaxes selon la revendication 1, caractérisée par le fait que les paliers individuels sont disposés autour de l'axe de la tête de palpage de manière concentrique à celui-ci.

4. Tête de palpage multiaxes selon la revendication 1, caractérisée par le fait que les éléments de palier sont agencés sous forme de billes (15, 151, 154) ou de cônes (155) qui sont fixés ou sont formés sur les éléments sphériques (15, 155) mobiles en rotation.

5. Tête de palpage multiaxes selon la revendication 4, caractérisée par le fait que chaque bille (15, 151, 154) ou chaque cône (155) coopère avec un contre-élément (14, 144, 145) de telle sorte que les zones de contact des zones superficielles concernées des billes (15, 151, 154) ou des cônes (155) forment un cercle chaque fois avec les zones superficielles des contre-éléments (14, 14, 145) associés.

6. Tête de palpage multiaxes selon la revendication 4, caractérisée par le fait que chaque bille (15, 151, 154) ou chaque cône (155) coopère avec des zones superficielles d'un perçage (144), d'une douille (14, 145), de plusieurs billes (141, 142, 143), de plusieurs corps en forme de cylindres ou d'une rainure formant contre-élément.

7. Tête de palpage multiaxes selon la revendication 6, caractérisée par le fait que les billes (151) ou les cônes coopèrent chacun avec trois billes (141, 142, 143) mutuellement décalées de 120°, chaque bille (151) ou chaque cône formant avec les trois billes (141, 142, 143) un palier indviduel à trois points d'appui.

8. Tête de palpage multiaxes selon la revendication 1, caractérisée par le fait que les éléments de palier sont agencés sous forme de perçages, de perçages coniques (157), de rainures ou de douilles (156).

9. Tête de palpage multiaxes selon la revendication 8, caractérisée par le fait qu'il est prévu chaque fois comme contre-élément une sphère (146, 147) ou un cône.

10. Tête de palpage multiaxes selon l'une des revendications précédentes 1, 3 à 9, caractérisée par le fait que les sièges des éléments sphériques sont aménagés dans un plateau de mesure qui est solidaire de la touche et les contre-éléments sont aménagés dans le corps de la tête de palpage.

11. Tête de palpage multiaxes selon l'une des revendications précédentes 1, 3 à 9, caractérisée par le fait que les sièges (18) des éléments sphériques (16) sont aménagés dans le corps (4, 13) de la tête de palpage et les contre-éléments (14) sont aménagés dans un plateau de mesure (10) monté dans le corps (4, 13) de la tête de palpage.

12. Tête de palpage multiaxes selon l'une des revendications précédentes 1, 3 à 11, caractérisée par le fait que les sièges (18) avec les éléments sphériques (16) et/ou les contre-éléments (14) sont aménagés sont aménagés dans des supports (19) mobiles axialement.
